# EUROPEAN PATENT APPLICATION

(11) **EP 0 965 532 A1**
(43) Date of publication of application: **22.12.1999**
(21) Application number: 99303929.6
(22) Date of filing: 20.05.1999
(51) Int. Cl.: B65D 33/34, B65D 33/18

(54) **Multiple Use Security Bag**

(30) Priority: 22.05.1998 GB 9811190
(71) Applicant: Britton Security Packaging Limited, Louth, Lincolnshire LN1 8RZ (GB)
(72) Inventor: Rowe, Simon, Bracebridge Heath, Lincolnshire LN4 2TJ (GB); West, Peter John, Louth LN11 9QE (GB)
(74) Representative: Shindler, Nigel

(57) **Abstract**

A re-usable security bag having a closure comprising a flap (6) including a plurality of separate seals (18,20,22,24), and at least one co-operating sealing area (32,34,36,38) on the outside of the body of the bag, the seals being separated by lines of perforations (26,28,30) so that the bag can be sealed using the outermost seal (24), subsequently opened at the perforation line adjacent the seal, and then re-sealed using the next seal.

## Description

This invention relates to security bags, and in particular to bags having "tamper evident" seals, which are used for transportation of valuable items, and provide a means of determining whether contents have been tampered with in transit.

For example, our International patent application published under no. WO93/16933 discloses a tamper evident seal for security bags, in which superimposed patterns of lines of printing ink and adhesive are so arranged that the ink lines are obviously broken up, in the event that the seal is tampered with.

In view of the increase levels of sophistication of such products, and their costs in terms of both raw materials, and manufacturing energy input, a demand has arisen for recyclable or reusable versions in order to reduce wastage of energy and resources.

Clearly, it is possible to recycle some types of plastics materials, by means of various reprocessing techniques, but all of these imply the input of additional energy even if the materials are reused, and consequently, the present invention seeks to provide a tamper evident security bag which can, nevertheless, be reused a number of times.

Accordingly, the present invention provides a security bag having a closure comprising a flap including a plurality of separate seals, and at least one co-operating sealing area on the outside of the body of the bag, the seals being separated by lines of perforations so that the bag can be sealed using the outermost seal, subsequently opened at the perforation line adjacent the seal, and then re-sealed and re-opened using each successive seal.

Alternatively the series of seals could be carried on the bag and the sealing area or areas could be on the flap.

In order to securely identify the currently effective seal, the bag preferably carries a separate panel for identifying information such as signatures, identifying codes or the like, the arrangement being such that as each seal is used, a corresponding entry is made on the panel.

One embodiment of the invention will now be described by way of example, with reference to the accompanying drawings in which:
Figure 1 is a plan view of a security bag according to the invention before sealing;
Figure 2 is a vertical cross-section along the line II-II of Figure 1 (the thickness of the bag being exaggerated for clarity); and
Figure 3 is a plan view of an alternative embodiment, after sealing.

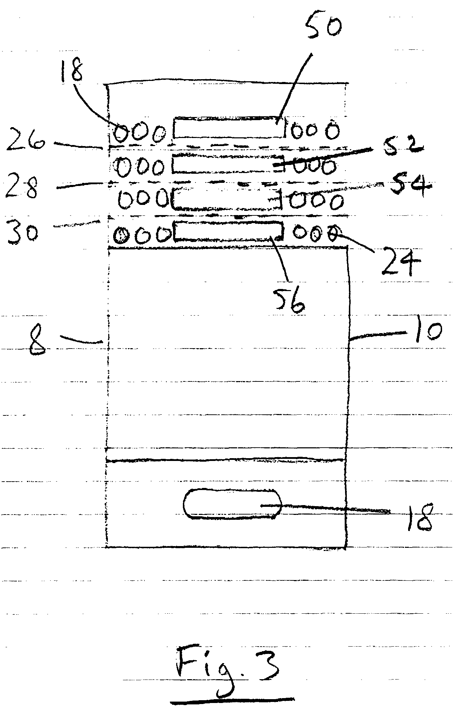

Referring to the drawing, it will be seen that the basic construction of the bag consists of two superimposed strips of polyethylene material, 2 and 4, with the upper sheet 4, as shown in Figure 2, being shorter, so that a flap 6 is formed at one end of the bag.

The opposite side edges 8 and 10 of the two strips are heat sealed together to close the sides of the bag, whilst the end of the bag opposite the flap is heat sealed at 12, and a further heat seal line 14 is made across the bag, spaced from the end, so as to form a closed portion 16 in which an aperture 18 (not shown in Figure 2) is formed, to provide a handle for the bag.

The flap carries four "tamper indicating" strip-like seals, 18, 20, 22 and 24, which are normally covered by a protective strip (not shown) until they are ready to be used, the four strips being separated by lines of perforations, 26, 28 and 30.

The upper layer 4 of the bag carries four corresponding strips of specially surfaced tape, or strips of a special surface finish or printing, which are designed to provide good adhesion for the seals, and as will be clear from the drawings, these are so positioned that they will be aligned with the tamper proof seals of the flap, if the end of the bag, including the flap 6, is folded over about the region 40, in order to close the bag. Alternatively a single wide sealing strip could be provided covering the whole area.

The upper surface of the bag also carries a panel 42 which is specially surfaced so that it can be written on for example with an indelible marker pen, and this is divided into four regions on which identifying markings can be made, corresponding to the four different seals 18 to 24, as will be explained below.

In use, when a article or articles which require to be securely transported are placed in the bag, the flap 6 is folded over, and for the first use, the seal 24 is brought into contact with the closure area 32, so as to seal the bag. A corresponding marking, such as a signature or code number is then made in the first area of the identifying panel 42, so that when the bag is received by the intended recipient, he is able to confirm that the bag has been used for the first time, and, of course, because of the tamper evident nature of the seal he is also able to confirm that it has not been opened in transit.

To open the bag, the recipient tears along the first strip of perforations 30, so that the seal 24 is still left sealed onto the region 32, and the bag can then be reused, the next closure being made between the tamper evident sealing strip 22 and its corresponding seal area 34. Again, a marking will then be made in the second box of the security panel 42, so as to confirm that the bag is being used for the second time.

In this way, the bag illustrated may be used for four journeys, rather than being discarded after only one journey, with a consequent considerable saving in materials, as well as transport costs for bulk quantities of bags. This is particularly significant in the case of a large bag, such as that required to transport the cash drawer of a "ATM" machine.

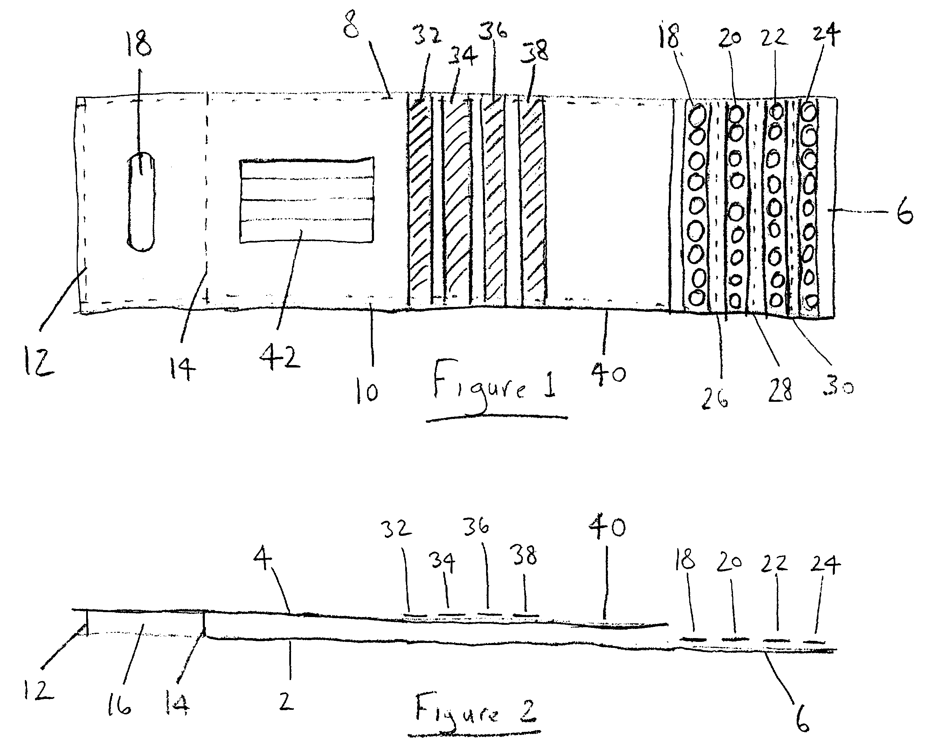

Figure 3 illustrates an alternative embodiment in which the physical construction is basically the same as that of Figures 1 and 2, but instead of a security marking panel 42 on the front panel of the bag, separate narrow panels 50, 52, 54 and 56 are provided on the outer surface of each of the tamper evident seals 18, 20, 22, 24. In this way each one can be clearly "validated" in turn with a signature or other distinctive marking as it is used.

## Claims

1. A re-usable security bag having a closure comprising a flap (6) including a plurality of separate seals, (18, 20, 22, 24) and at least one co-operating sealing area (32, 34, 36, 38) on the outside of the body of the bag, the seals being separated by lines of perforations (26, 28, 30) so that the bag can be sealed using the outermost seal (24), subsequently opened at the perforation line (30) adjacent the seal, and then re-sealed using the next seal.

2. A security bag according to claim 1 further comprising a panel (42) on the outside surface of the bag, the panel being adapted to receive markings indicating which seal is currently in use.

3. A security bag according to claim 2 in which the panel (42) is specially surfaced for use with an indelible marker pen.

4. A security bag according to any preceding claim in which the closure is arranged at one end of the bag, and the other end of the bag is formed with an aperture (18) to provide a handle.

5. A security bag according to claim 1 further comprising a respective panel (50, 52, 54, 56) on the outer surface of each seal (18, 20, 22, 24) of the flap, the panel being adapted to receive markings indicating that the respective seal is currently in use.

6. A reusable security bag comprising:
a first, shorter front panel of flexible plastics material (4) and a second, longer rear panel of flexible plastics material (2), the panels being connected together along three edges so as to form a pocket with the extending portion of the rear panel forming a closure flap (6);
the flap (6) being divided into sections along its length by at least one lateral line of perforations (26, 28, 30), and a tamper-evident sealing means (18, 20, 22, 24) being provided on each section;
the front panel having a co-operating surface (32, 34, 36, 38) to receive the sealing means, whereby the bag may be sealed for a first use by means of the outermost sealing means (24) nearest the end of the flap, and can then be opened by tearing along the corresponding outermost perforation (30), and the bag may then be resealed for further uses, by means of each of the adjacent sealing means (22, 20, 18) in turn, and opened using its corresponding line of perforations.

7. A reusable security bag according to claim 6 in which the front and rear panels (4, 2) are formed by folding over a single long strip of flexible plastics material, and heat-sealing the panels together along their side edges.

8. A reusable security bag according to claim 6 or claim 7 comprising a further heat-sealed line (14) extending laterally across the bag at a position spaced from the closed end, forming a reinforced region, an aperture (18) being formed in the said region to provide a handle.

9. A security bag according to any one of claims 6 to 8 further comprising a panel (42) on the outside surface of the bag, the panel being adapted to receive markings indicating which seal is currently in use.

10. A security bag according to any one of claims 6 to 8 further comprising a respective panel (50, 52, 54, 56) on the outer surface of each seal of the flap, the panel being adapted to receive markings indicating that the respective seal is current in use

11. A security bag according to claim 9 or claim 10 in which the panel is specially surfaced for use with an indelible marker pen.

12. A security bag according to any one of claims 6 to 11 in which the closure is arranged at one end of the bag, and the other end of the bag is formed with an aperture to provide a handle.
